(19) Europäisches Patentamt
European Patent Office
Office européen des brevets

(11) Veröffentlichungsnummer: **0 434 623 B1**

(12) **EUROPÄISCHE PATENTSCHRIFT**

(45) Veröffentlichungstag der Patentschrift: **15.03.95**

(51) Int. Cl.$^6$: **C09B 44/08**, C09B 43/00, D21H 21/28, D06P 1/08

(21) Anmeldenummer: **90810985.3**

(22) Anmeldetag: **13.12.90**

Die Akte enthält technische Angaben, die nach dem Eingang der Anmeldung eingereicht wurden und die nicht in dieser Patentschrift enthalten sind.

# (54) Kationische Azofarbstoffe.

(30) Priorität: **22.12.89 CH 4642/89**

(43) Veröffentlichungstag der Anmeldung:
**26.06.91 Patentblatt 91/26**

(45) Bekanntmachung des Hinweises auf die Patenterteilung:
**15.03.95 Patentblatt 95/11**

(84) Benannte Vertragsstaaten:
**CH DE FR GB IT LI**

(56) Entgegenhaltungen:
**EP-A- 0 263 073**
**US-A- 4 168 264**
**US-A- 4 248 775**

(73) Patentinhaber: **CIBA-GEIGY AG**
**Klybeckstrasse 141**
**CH-4002 Basel (CH)**

(72) Erfinder: **Stingelin, Willy**
**Stockackerstrasse 1A**
**CH-4153 Reinach (CH)**

EP 0 434 623 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue kationische, von Sulfonsäuregruppen freie Azofarbstoffe, Verfahren zu deren Herstellung sowie deren Verwendung zum Färben von Textilmaterialien und insbesondere von Papier.

Die neuen Azofarbstoffe entsprechen der Formel

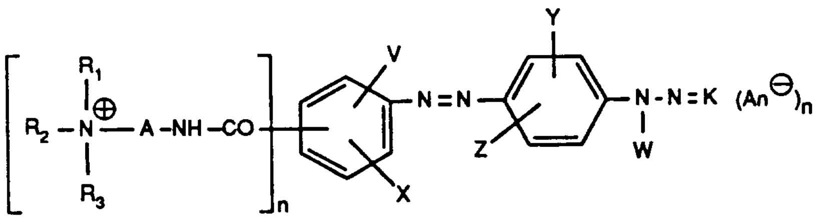

(I)

worin

$R_1$, $R_2$ und $R_3$ unabhängig voneinander je einen gegebenenfalls substituierten Alkylrest oder $R_1$ und $R_2$ zusammen mit dem sie verbindenden Stickstoffatom oder $R_1$, $R_2$ und $R_3$ zusammen mit dem sie verbindenden Stickstoffatom einen heterocyclischen Rest,

A einen Alkylenrest mit 2 bis 6 C-Atomen,

V und X unabhängig voneinander Wasserstoff, gegebenenfalls durch Hydroxy, Halogen, Cyan oder $C_1$-$C_4$-Alkoxy substituiertes $C_1$-$C_4$-Alkyl oder $C_1$-$C_4$-Alkoxy,

Y Wasserstoff, $C_1$-$C_4$-Alkyl oder -Alkoxy, Halogen, Cyan,

Z Wasserstoff, $C_1$-$C_4$-Alkyl oder -Alkoxy, Halogen, Cyan, eine Gruppe der Formel

-NH-CHO,
-NH-CO-$NH_2$,
-NH-CO-NH-Q oder
-NH-CO-$(O)_m$-Q,

worin m Null oder 1 und Q gegebenenfalls substituiertes $C_1$-$C_4$-Alkyl oder Phenyl bedeutet,

W einen gegebenenfalls substituierten Alkylrest,

K eine Kupplungskomponente der Formel

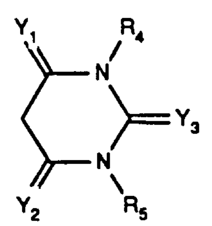

(II)

worin

$Y_1$ und $Y_2$ unabhängig voneinander =O, =NH oder =N-$C_1$-$C_4$-Alkyl,

$Y_3$ =O, =S, =NR oder =N-CN, wobei R Wasserstoff oder $C_1$-$C_4$-Alkyl ist,

$R_4$ und $R_5$ unabhängig voneinander je Wasserstoff, gegebenenfalls substituiertes Alkyl oder gegebenenfalls substituiertes Phenyl bedeuten,

n 1 oder 2 und

$An^{\ominus}$ ein Anion darstellt.

In der obigen Formel (II) ist für die Kupplungskomponente nur eine tautomere Form angegeben, auch die anderen tautomeren Formen sollen jedoch durch diese Formel mit umfasst sein. Durch die Formel (I) sollen ausserdem auch solche Farbstoffe mit umfasst sein, bei denen der Rest W an ein O- oder N-Atom gebunden ist, welches sich an der Kupplungskomponente K in o-Stellung zur Azobrücke befindet.

$R_1$, $R_2$, $R_3$ und W stellen unabhängig voneinander je einen gegebenenfalls substituierten Alkylrest dar, beispielsweise Methyl, Ethyl, n- oder iso-Propyl, n-, sec- oder tert-Butyl, geradkettiges oder verzweigtes Pentyl oder Hexyl, Cyclopentyl oder Cyclohexyl, wobei diese Reste substituiert sein können, z.B. durch

Hydroxy, Alkoxy, Cyano, Carbonamido oder am N-Atom mono- oder dialkyliertes Carbonamido, oder Phenyl, welches gegebenenfalls weitersubstituiert ist, z.B. durch Alkyl oder Alkoxy.

Beispiele für solche substuierten Reste sind Hydroxymethyl, Hydroxyethyl, Methoxyethyl, Ethoxyethyl, Propoxypropyl, Benzyl, Cyanethyl oder Carbonamidoethyl.

$R_1$ und $R_2$ können auch zusammen mit dem sie verbindenden Stickstoffatom einen heterocyclischen Rest darstellen, beispielsweise einen Pyrrolidin-, Piperidin-, Morpholin- oder Piperazinrest, oder $R_1$, $R_2$ und $R_3$ bilden zusammen mit dem sie verbindenden Stickstoffatom einen heterocyclischen Rest, z.B. einen Pyridinium- oder monoquaternierten Triethylendiaminrest.

Vorzugsweise bedeutet $R_1$ Methyl oder Hydroxyethyl und $R_2$ und $R_3$ unabhängig voneinander je $C_1$-$C_3$-Alkyl, insbesondere je Methyl.

A bedeutet einen Alkylenrest mit 2 bis 6 C-Atomen, vorzugsweise einen unverzweigten Rest, z.B. Ethylen, Propylen, Butylen, Pentylen oder Hexylen. Vorzugsweise bedeutet A Ethylen oder Butylen und insbesondere Propylen.

V und X bedeuten unabhängig voneinander je Wasserstoff, $C_1$-$C_4$-Alkyl oder -Alkoxy, wobei diese letztgenannten Gruppen durch Hydroxy, Halogen, wie Brom oder vor allem Chlor, Cyan oder $C_1$-$C_4$-Alkoxy substituiert sein können. Vorzugsweise ist V Wasserstoff und X Wasserstoff, Methyl oder Methoxy.

Y bedeutet Wasserstoff, $C_1$-$C_4$-Alkyl oder -Alkoxy, Halogen, wie Brom oder Chlor, oder Cyan. Vorzugsweise bedeutet Y Wasserstoff, Methyl, Methoxy oder Chlor.

Z bedeutet Wasserstoff, $C_1$-$C_4$-Alkyl oder -Alkoxy, Halogen, wie Brom oder Chlor, Cyan oder eine Gruppe der Formel

-NH-CHO,
$-NH-CO-NH_2$,
-NH-CO-NHQ oder
$-NH-CO-(O)_m-Q$,

worin m Null oder 1 und Q gegebenenfalls substituiertes $C_1$-$C_4$-Alkyl oder Phenyl bedeutet. Als Substituenten für die Alkylgruppen Q kommen z.B. Halogen, wie Chlor oder Brom, oder vor allem Gruppen der Formeln

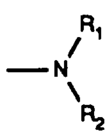

oder

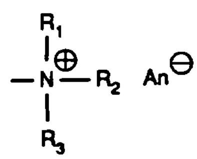

in Betracht, wobei $R_1$, $R_2$ und $R_3$ die weiter vorne angeführten Bedeutungen aufweisen und $An^{e}$ ein Anion ist. Als Substituenten für die Phenylgruppe Q kommen z.B. in Frage: $C_1$-$C_4$-Alkyl oder -Alkoxy, Halogen oder Nitro.

Vorzugsweise bedeutet Z Methyl, Ethyl, Methoxy, Ethoxy, Acetylamino, Propionylamino, Methoxycarbonylamino, Ethoxycarbonylamino oder eine Gruppe der Formel -NH-CHO, $-NH-CO-NH_2$,

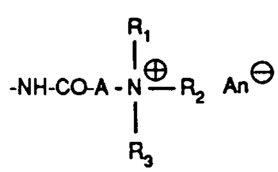

,

$-NH-CO-R_2$ oder

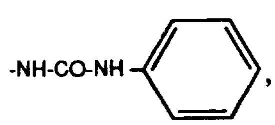

,

worin A Methylen, Ethylen, Propylen, oder Butylen, $R_1$ Methyl oder Hydroxyethyl und $R_2$ und $R_3$ unabhängig voneinander je $C_1$-$C_3$-Alkyl bedeuten.

W bedeutet vorzugsweise $C_1$-$C_4$-Alkyl, welches durch Hydroxy, Cyan, Alkoxy, Phenyl oder Carbonamido substituiert sein kann.

Bei der Definition der Kupplungskomponente K der oben aufgeführten Formel (II) bedeuten $R_4$ und $R_5$ unabhängig voneinander je Wasserstoff, gegebenenfalls substituiertes Alkyl oder gegebenenfalls substituiertes Phenyl.

Stellen $R_4$ und/oder $R_5$ eine gegebenenfalls substituierte Alkylgruppe dar, so ist darunter z.B. ein Methyl-, Ethyl-, n- oder iso-Propyl-, n-, sec.- oder tert.-Butyl-, ein geradkettiger oder verzweigter Pentyl- oder Hexyl- oder ein Cyclohexylrest zu verstehen, der einfach oder mehrfach z.B. durch -OH, $C_1$-$C_4$-Alkoxy oder $C_1$-$C_4$-Hydroxyalkoxy substituiert sein kann.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl und 2-Hydroxyethoxypentyl.

Bedeuten $R_4$ und/oder $R_5$ gegebenenfalls substituiertes Phenyl, so kann es sich um unsubstituiertes oder einfach oder mehrfach mit gleichen oder verschiedenen Resten substituiertes Phenyl handeln.

Als derartige Rest kommen z.B. in Frage: $C_1$-$C_4$-Alkyl, worunter Methyl, Ethyl, n- oder iso-Propyl oder n-, sec.- oder tert.-Butyl zu verstehen ist, $C_1$-$C_4$-Alkoxy, welches in dieser Anmeldung generell, Methoxy, Ethoxy, n- oder iso-Propoxy oder n-, sec.- oder tert.-Butoxy umfasst, Halogen wie Fluor, Chlor oder Brom oder Nitro.

Vorzugsweise handelt es sich bei $R_4$ und/oder $R_5$ als Phenyl um unsubstituiertes oder mit 1 bis 3 $C_1$-$C_4$-Alkyl, Chlor oder Methoxygruppen substituiertes Phenyl, wobei insbesondere die Bedeutung unsubstituiertes Phenyl bevorzugt ist.

$R_4$ und $R_5$ stehen bevorzugt für Wasserstoff oder $C_1$-$C_4$-Alkyl und besonders bevorzugt für Wasserstoff oder Methyl.

$Y_1$ und/oder $Y_2$ stehen vorzugsweise für die funktionelle Gruppe =O oder =NH, wobei es ausserdem bevorzugt ist, dass $Y_1$ und $Y_2$ gleich sind. $Y_1$ und $Y_2$ sind besonders bevorzugt gleich und bedeuten jeweils =O.

$Y_3$ stellt bevorzugt die Gruppe =O, =S, =NH oder =N-CN und insbesondere bevorzugt die Gruppe =O dar.

In einer besonders bevorzugten Ausführungsform der erfindungsgemässen Azofarbstoffe stehen $Y_1$, $Y_2$ und $Y_3$ jeweils für =O.

Als Anionen $An^{\ominus}$ kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Eine bevorzugte Ausführungsform der Erfindung betrifft Azofarbstoffe der Formel (I),
worin
$R_1$ Methyl oder Hydroxyethyl,
$R_2$ und $R_3$ unabhängig voneinander je $C_1$-$C_3$-Alkyl,
A Ethylen, Propylen oder Butylen,
V Wasserstoff,
X Wasserstoff, Methyl oder Methoxy,
Y Wasserstoff, Methyl, Methoxy oder Chlor,
Z Methyl, Methoxy, Ethyl, Ethoxy, Acetylamino, Propionylamino, Methoxycarbonylamino, Ethoxycarbonylamino oder eine Gruppe der Formel

-NH-CHO,
$-NH-CO-NH_2$,

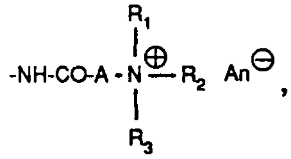

$-NH-CO-R_2$ oder

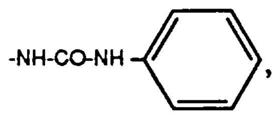

W $C_1$-$C_4$-Alkyl oder $C_1$-$C_4$-Alkyl, welches durch Hydroxy, Cyan, $C_1$-$C_4$-Alkoxy, Phenyl oder Carbonamido substituiert ist,
K eine Kupplungskomponente der Formel

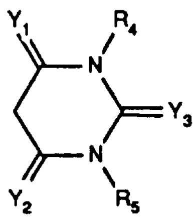

(II)

worin
$Y_1$ und $Y_2$ unabhängig voneinander je =O oder =NH,
$Y_3$ =O, =S, =NH oder =N-CN,
$R_4$ und $R_5$ unabhängig voneinander Wasserstoff oder $C_1$-$C_4$-Alkyl bedeuten,
n 1 oder 2 und
$An^{\ominus}$ ein Anion bedeutet.

Unter diesen sind diejenigen besonders bevorzugt, bei denen $R_1$, $R_2$ und $R_3$ je Methyl, A Propylen, V und X je Wasserstoff, $Y_3$ = O, $R_4$ und $R_5$ je Wasserstoff oder Methyl bedeuten und die übrigen Symbole die vorstehend aufgeführten Bedeutungen aufweisen.

Die Herstellung der Azofarbstoffe der Formel (I) erfolgt in an sich bekannter Art und Weise, beispielsweise indem man ein Amin der Formel

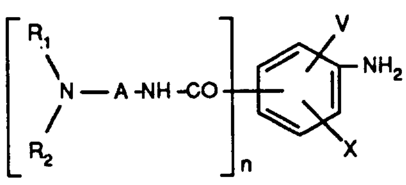

(III)

diazotiert, mit einer Kupplungskomponente der Formel

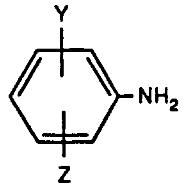

(IV)

umsetzt, die erhaltene Aminoazoverbindung erneut diazotiert, mit einer Kupplungskomponente der Formel

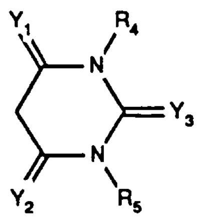

(II)

kuppelt, und anschliessend mit einem Alkylierungsmittel umsetzt, welches die Reste $R_3$ und W einführt, wobei in diesem Falle $R_3$ und W identische Bedeutung aufweisen. Bei den Formeln (II), (III) und (IV) gelten für $R_1$, $R_2$, $R_3$, A, V, X, Y, Z, $Y_1$, $Y_2$, $Y_3$, $R_4$, $R_5$, n, W und $An^{\ominus}$ die zuvor angegebenen Bedeutungen und Bevorzugungen.

Die Verbindungen der Formeln (II), (III) und (IV) sind bekannt oder können auf bekannte Art und Weise erhalten werden.

Eine weitere Methode zur Darstellung der erfindungsgemässen Azofarbstoffe besteht darin, dass man einen Farbstoff der Formel

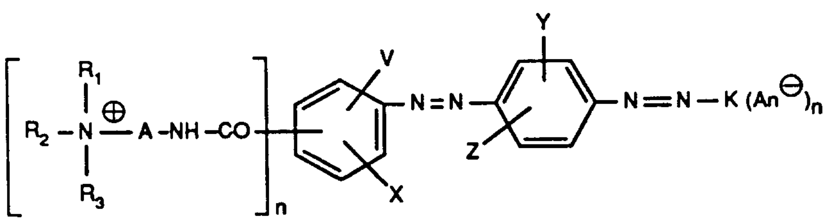

(V)

mit einem Alkylierungsmittel, welches die Gruppe W einführt, umsetzt. $R_1$, $R_2$, $R_3$, A, n, V, X, Z, Y, K, $An^{\ominus}$ und W weisen dabei die unter der Formel (I) angegebenen Bedeutungen auf.

In der obigen Formel (V) ist für die Azobindung mit der Kupplungskomponente K nur eine tautomere Form aufgeführt, diese Formel soll jedoch auch die Hydrazoform des Farbstoffes mit umfassen.

Die Farbstoffe der Formel (V) sind z.B. aus der EP-A-263 073 bekannt. Die Reaktionsbedingungen für die Alkylierung der Farbstoffe der Formel (V) entsprechen den für solche Reaktionen üblichen Bedingungen.

Die Azoverbindungen der Formel (I) werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid- oder -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden, wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Polyglykole, Diglykoläther, vorzugsweise Methyl- oder Aethyläther.

Verwendung finden die Azoverbindungen der Formel (I) vor allem als Farbstoffe zum Färben und Bedrucken von Textilmaterialien, Papier, Leder und zur Bereitung von Tinten. Als Textilmaterialien kommen natürliche und synthetische kationisch anfärbbare Materialien in Frage. Bevorzugt werden die neuen Azoverbindungen zum Färben und Bedrucken von Papier, Halbkartons und Kartons in der Masse und in der Oberfläche, sowie von Textilmaterialien, die z.B. vorteilhaft aus Homo- oder Mischpolymerisaten des Acrylnitrils bestehen oder aus synthetischen Polyamiden oder Polyestern, welche durch saure Gruppen modifiziert sind, eingesetzt. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden oder Pullover.

Mit den erfindungsgemässen Farbstoffen lassen sich egale Färbungen bzw. Drucke herstellen, die sich durch sehr gute Allgemeinechtheiten vor allem einen sehr hohen Ausziehgrad und gute Wasserechtheiten auszeichnen. Insbesondere auf schnellziehendem Polyacrylnitrilmaterial zeichnen sich die erfindungsgemässen Farbstoffe durch hohen Ausziehgrad und gute Lichtechtheit aus.

Des weiteren können die neuen Azoverbindungen der Formel (I) auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Azoverbindungen der Formel (I) haben auf diesen Textilmaterialien ein gutes Ziehvermögen, einen hohen Ausziehgrad und die erhaltenen Färbungen weisen sehr gute Echtheiten, vor allem Nassechtheiten auf.

Eine bevorzugte Verwendung der neuen Azoverbindungen der Formel (I) liegt in der Anwendung zum Färben von Papier aller Arten, vor allem von gebleichtem ungeleimtem und geleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit- und/oder -sulfat-Zellstoff verwendet werden kann. Ganz besonders geeignet sind diese Verbindungen zum Färben von ungeleimtem Papier (z.B. Servietten, Tischdecken, Hygienepapieren) als Folge ihrer sehr hohen Affinität zu diesem Substrat.

Die neuen Azoverbindungen der Formel (I) ziehen auf diese Substrate sehr gut auf, wobei die Farb-Abwässer praktisch farblos bleiben.

Man erhält Färbungen in gelben, gelb-orangen oder roten Nuancen.

Die erhaltenen Färbungen zeichnen sich durch gute Allgemeinechtheiten aus, wie eine gute Lichtechtheit bei gleichzeitig hoher Reinheit und Farbstärke und Nassechtheit, d.h. sie zeigen keine Neigung zum Ausbluten, wenn gefärbtes Papier in nassem Zustand mit feuchtem weissem Papier in Berührung gebracht wird Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsstes Mineralwasser; wegen ihrer guten Alkoholechtheit sind sie auch gegen alkoholische Getränke beständig. Diese Eigenschaft ist z.B. besonders für Servietten und Tischdecken erwünscht, bei denen vorhersehbar ist, dass das gefärbte Papier in nassem Zustand (z.B. getränkt mit Wasser, Alkohol, Tensid-Lösung etc....) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe sind für das Kontinue-Färben von Papier von grossem Vorteil.

Die folgenden Beispiele veranschaulichen die Erfindung, ohne sie darauf zu limitieren. Teile (T) sind - sofern nichts anderes angegeben - Gewichtsteile und die Temperaturen sind in Grad Celsius angegeben.

Die Abkürzung RKN stellt eine Qualitätsbezeichnung dar und gibt den Reinheitsgrad der Cellulose an; die Abkürzung SR (Schopper-Riegler) gibt den Mahlgrad an.

Beispiel 1:

A) Zu einer Lösung von 84 Teilen p-Nitrobenzoylchlorid in 260 Teilen Toluol werden 95,1 Teile Dimethylaminopropylamin innerhalb von 15 Minuten zugetropft. Die Temperatur steigt dabei exotherm auf 95 °C. Nach dem Absinken der Temperatur auf 30 °C werden 200 Teile Wasser zugegeben, auf 10 °C gekühlt, das ausgefallene Produkt abgesaugt, mit Wasser salzfrei gewaschen und unter Vakuum bei 60 °C getrocknet. Zur Hydrierung wird es in Anwesenheit von Palladiumkohle in 320 Teilen Methanol und 52 Teilen 32%-iger Salzsäure gelöst, und mit Wasserstoff hydriert. Nach Beendigung der Reduktion wird der Katalysator abgesaugt und das Methanol unter Vakuum abdestilliert. Der Rückstand entpricht der Formel

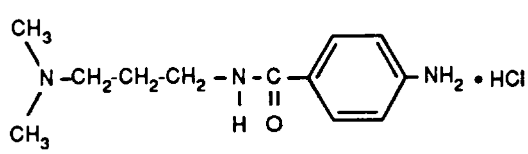

B) 7,7 Teile der gemäss A) hergestellten Verbindung werden in 35 Teilen Wasser gelöst, mit 30 Teilen Eis und 7 Teilen 32 %iger Salzsäure versetzt und mit 20,8 Teilen 1n Natriumnitritlösung bei 0-5° diazotiert. Dann werden 2,4 Teile 2,5 Dimethylanilin in 42 Teilen 3,5 %iger Salzsäure gelöst und in die Diazolösung getropft. Durch Einstreuen von krist. Na-acetat wird das Kupplungsgemisch auf einen pH-Wert von 3,5-4 gestellt. Sobald keine Diazolösung mehr nachweisbar ist, wird der Farbstoff mit Kochsalz ausgefällt. Danach wird der Niederschlag filtriert und mit Salzlösung gewaschen. Der vorliegende Monoazofarbstoff wird in 100 Teilen Wasser suspendiert, dann werden 7 Teile 32%-ige Salzsäure zugesetzt und bei 0-5 °C mit 19,2 Teilen 1n Natriumnitritlösung diazotiert. Bei 0-10 °C wird die Diazolösung zu einer Lösung von 2,4 Teilen Barbitursäure in 100 Teilen Wasser und 15 Teilen 30%-iger Natronlauge getropft, wobei ein pH-Wert von 6-7 durch Zugabe von Natronlauge gehalten wird. Man rührt 4 Stunden, erhöht den pH-Wert auf 9-10 mit Natronlauge, und tropft 5,8 Teile Dimethylsulfat bei 20-25 ° C in 30 Minuten zu, setzt dann 160 Teile Ethanol zu, rührt weitere 2 Stunden, saugt den ausgefallenen Farbstoffe ab, wäscht mit Ethanol, dann mit Aceton und trocknet im Vakuum bei 60 ° C. Der Farbstoff, entsprechend der Formel

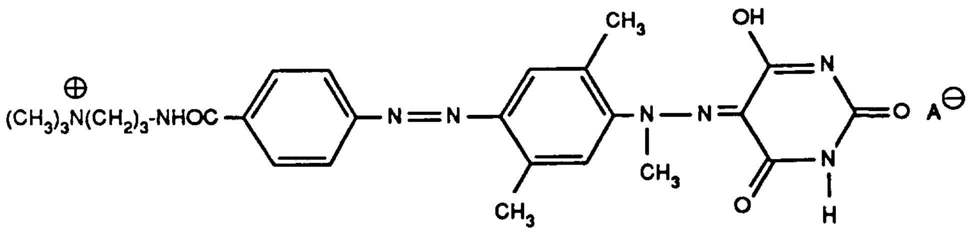

$A^{\ominus}$: Mischung aus $Cl^{\ominus}$ und $CH_3OSO_3^{\ominus}$

wird in Form eines Pulvers erhalten, das in verdünnter Ameisensäure löslich ist und Papier in gelborangen Tönen färbt. Die Papierfärbungen zeigen gute Licht- und Nassechtheiten.

Beispiel 2: Arbeitet man wie im Beispiel 1 A) beschrieben, verwendet jedoch anstelle von p-Nitrobenzoylchlorid die gleiche Menge m-Nitrobenzoylchlorid, so erhält man die Verbindung der Formel

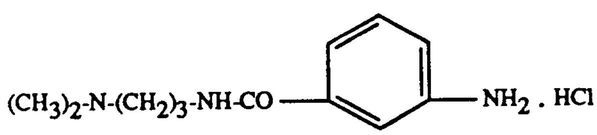

Von dieser Verbindung setzt man 5,7 Teile ein und arbeitet wie im Beispiel 1 B) beschrieben. Man erhält den Farbstoff der Formel

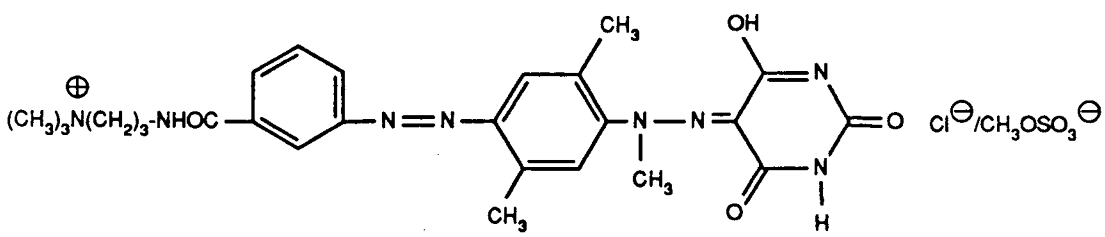

der in Form eines Pulvers anfällt, das in verdünnter Ameisensäure löslich ist und Papier in gelborangen Tönen färbt. Die Papierfärbungen zeigen gute Licht und Nassechtheiten.

Beispiel 3:

A) Zu einer Lösung von 47 Teilen p-Nitrobenzoylchlorid in 174 Teilen Toluol tropft man innerhalb von 15 Minuten 65,7 Teile Diethylaminopropylamin. Die Temperatur steigt dabei exotherm auf 90 ° C. Nach dem Absinken der Temperatur auf 35 ° C werden 100 Teile Wasser zugesetzt und verrührt. Man wartet, bis sich die Phasen getrennt haben, wäscht die organische Phase mit Wasser, trocknet und dampft ein. Den Rückstand löst man in 45 Teilen Methanol und 28,5 Teilen 32%-iger Salzsäure und hydriert wie im Beispiel 1A) beschrieben. Man erhält die Verbindung der Formel

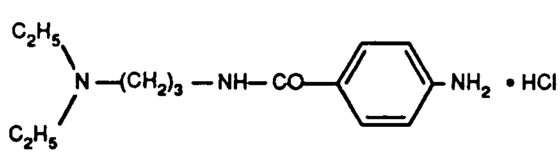

Von dieser Verbindung setzt man 5,5 Teile ein und arbeitet wie im Beispiel 1B) beschrieben. Man erhält den Farbstoff der Formel

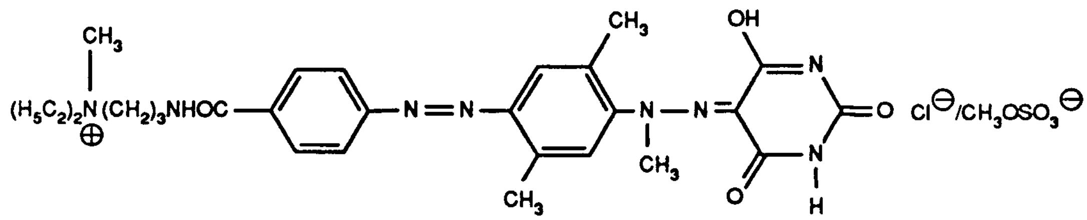

der in Form eines Pulvers anfällt, das in verdünnter Ameisensäure löslich ist und Papier in gelborangen Tönen färbt. Die Papierfärbungen zeigen gute Licht- und Nassechtheiten.

Beispiel 4: 63,9 Teile 5-Nitroisophthalsäuredimethylester und 87,1 Teile Dimethylaminopropylamin werden zusammen während 12 Stunden bei 45-50 °C gerührt, anschliessend das entstandene Methanol und das überschüssige Amin im Vakuum abdestilliert. Der Rückstand wird in 180 Teilen Wasser gelöst und über Palladiumkohle hydriert. In der wässrigen Lösung liegt die Verbindung der Formel

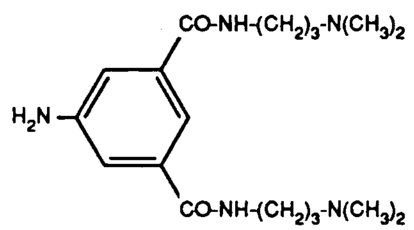

vor.

Mit 18,3 Teilen der wässrigen Lösung, enthaltend 6,2 Teile dieser Verbindung arbeitet man wie im Beispiel 1B beschrieben. Man erhält die Verbindung der Formel

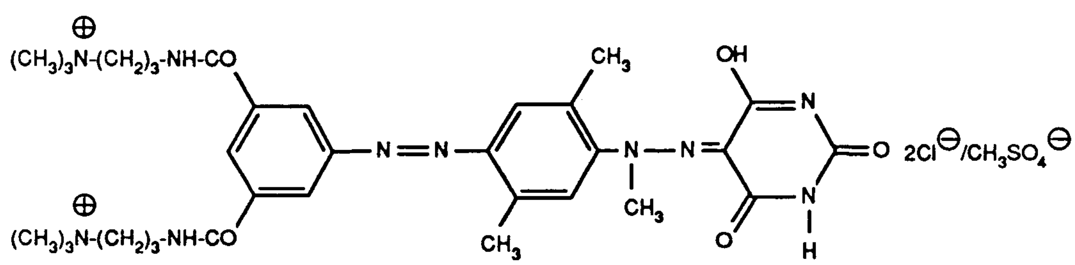

die in Form eines Pulvers anfällt, das in Wasser oder verdünnten Säuren löslich ist und Papier in gelborangen Tönen färbt. Die Papierfärbungen zeigen gute Licht- und Nassechtheiten.

Beispiel 5 - 12: Verwendet man bei ansonsten gleichem Vorgehen wie im Beispiel 1 beschrieben äquivalente Mengen der in Spalte 2 der folgenden Tabelle aufgeführten Anilinderivate und der in Spalte 3 aufgeführten Kupplungskomponenten, so erhält man Farbstoffe der Formel

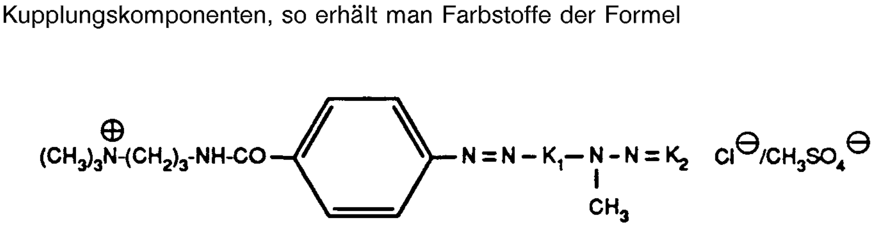

welche Papier in den in Spalte 4 angegebenen Nuancen mit guten Echtheiten färben.

| Nr. | $K_1$ | $K_2$ | Nuance auf Papier |
|---|---|---|---|
| 5 | 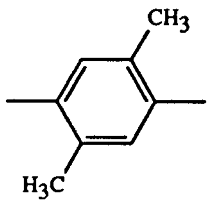 | 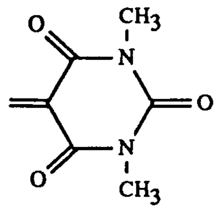 | goldgelb |
| 6 | 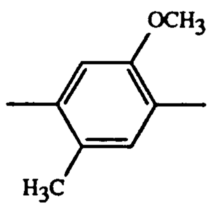 | 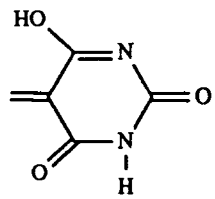 | orange |
| 7 | 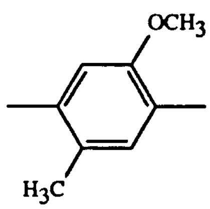 | 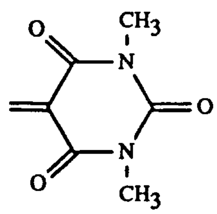 | orange |
| 8 | 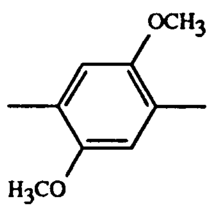 | 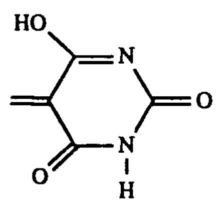 | rot |
| 9 | 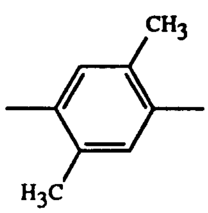 | 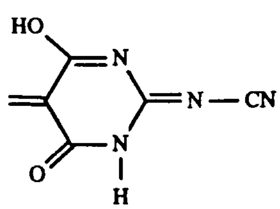 | goldgelb |
| 10 | 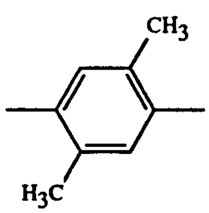 | 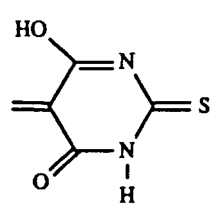 | orange |

| Nr. | $K_1$ | $K_2$ | Nuance auf Papier |
|---|---|---|---|
| 11 | 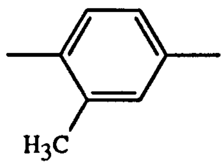 | 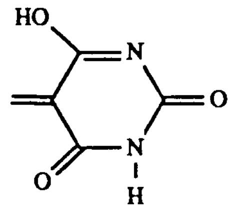 | gelb |
| 12 | 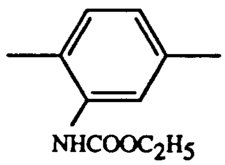 | 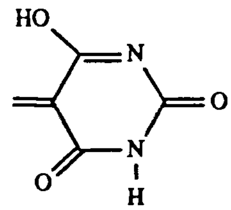 | goldgelb |

Beispiele 13 - 19: Verwendet man bei ansonsten gleichem Vorgehen wie im Beispiel 4 beschrieben äquivalente Mengen der in Spalte 2 der folgenden Tabelle aufgeführten Anilinderivate und der in Spalte 3 aufgeführten Kupplungskomponenten, so erhält man Farbstoffe der Formel

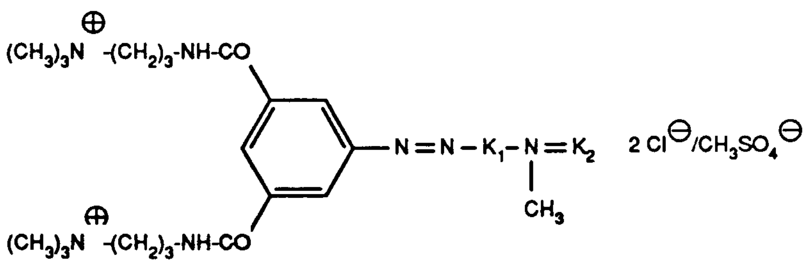

welche Papier in den in Spalte 4 angegebenen Nuancen mit guten Echtheiten färben.

| Nr. | $K_1$ | $K_2$ | Nuance auf Papier |
|---|---|---|---|
| 13 | 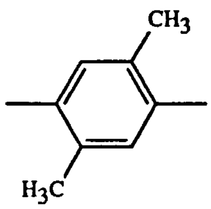 | 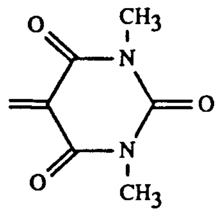 | gelb |
| 14 | 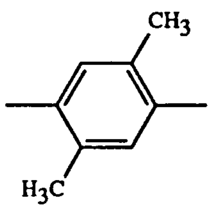 | 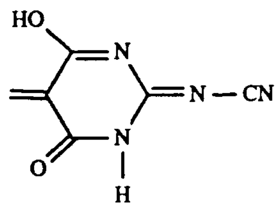 | orange |
| 15 | 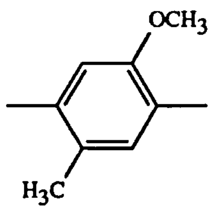 | 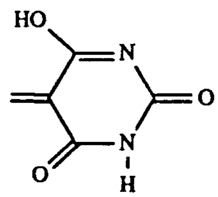 | orange |
| 16 | 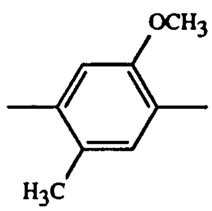 | 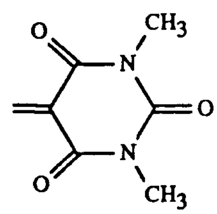 | orange |
| 17 | 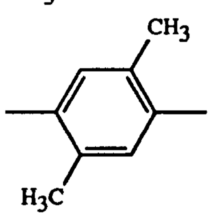 | 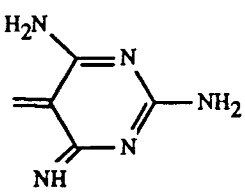 | orange |
| 18 | 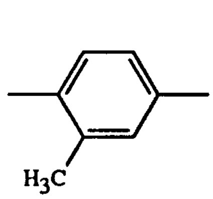 | 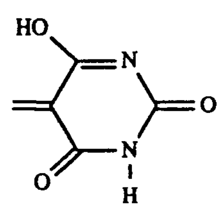 | gelb |
| 19 | 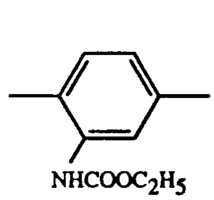 | 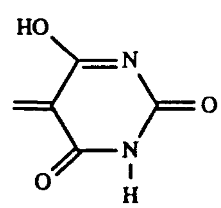 | gelb |

<u>Beispiele 20 - 23:</u> Verwendet man bei ansonsten gleichem Vorgehen wie im Beispiel 3 beschrieben äquivalente Mengen der in Spalte 2 der folgenden Tabelle aufgeführten Anilinderivate und der in Spalte 3 aufgeführten Kupplungskomponenten, so erhält man Farbstoffe der Formel

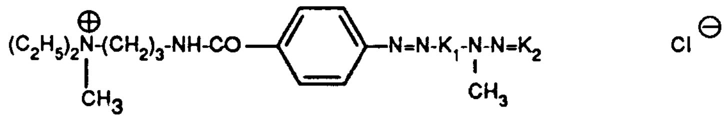

welche Papier in den in Spalte 4 angegebenen Nuancen mit guten Echtheiten färben.

| Nr. | $K_1$ | $K_2$ | Nuance auf Papier |
|---|---|---|---|
| 20 | 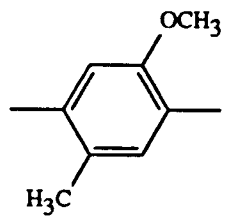 | 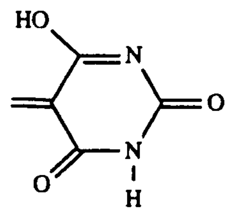 | orange |
| 21 | 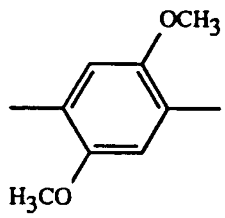 | 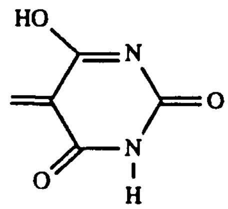 | rot |
| 22 | 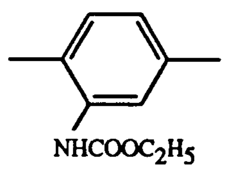 | 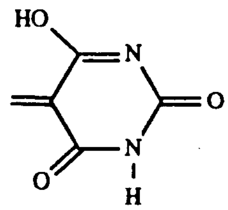 | gelb |
| 23 | 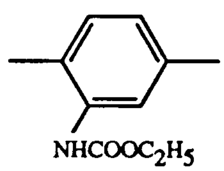 | 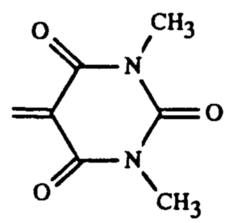 | gelb |

Beispiel 24: Man vermischt 50 Teile chemisch gebleichte Buche-Sulfitzellulose mit 50 Teilen gebleichter Fichtezellulose RKN 15 (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer sehr intensiven Goldgelbnuance gefärbt. Das Abwasser ist völlig farblos. Der Ausziehgrad erreicht praktisch 100 %. Die Licht- und Nassechtheiten sind ausgezeichnet.

Beispiel 25: Es wird eine Papierbahn aus gebleichter Buche-Sulfitzellulose (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine farbstarke Orangenuance von mittlerer Intensität. Das Abwasser ist völlig farblos.

Beispiel 26: 10 Teile Baumwollgewebe (gebleichte mercerisierte Baumwolle) werden in einem Labor-Baumfärbeapparat in 200 Teile einer Flotte (Wasserhärte 10° dH, pH 4, 3 Umwälzungen der Färbeflotte pro Minute) die 0,05 Teile des Farbstoffes gemäss Beispiel 1 enthält, gefärbt. Die Temperatur wird in 60

Minuten von 20° auf 100° erhöht, dann während 15 Minuten konstant gehalten.

Die Färbeflotte ist völlig ausgezogen. Es entsteht auf dem Baumwollgewebe eine farbstarke orange Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke orange Färbung, die eine gute Lichtechtheit und sehr gute Nassechtheit besitzt.

**Patentansprüche**

**1.** Kationische, von Sulfonsäuregruppen freie Azofarbstoffe der Formel

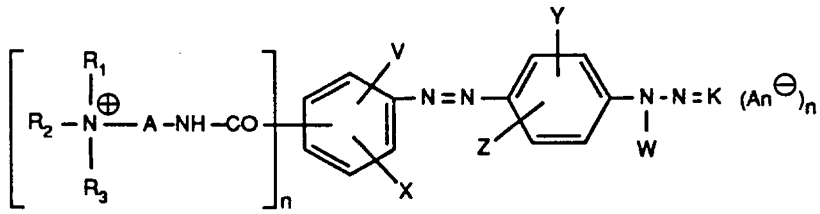

(I)

worin

$R_1$, $R_2$ und $R_3$ unabhängig voneinander je einen gegebenenfalls substituierten Alkylrest oder $R_1$ und $R_2$ zusammen mit dem sie verbindenden Stickstoffatom oder $R_1$, $R_2$ und $R_3$ zusammen mit dem sie verbindenden Stickstoffatom einen heterocyclischen Rest,

A einen Alkylenrest mit 2 bis 6 C-Atomen,

V und X unabhängig voneinander Wasserstoff, gegebenenfalls durch Hydroxy, Halogen, Cyan oder $C_1$-$C_4$-Alkoxy substituiertes $C_1$-$C_4$-Alkyl oder $C_1$-$C_4$-Alkoxy,

Y Wasserstoff, $C_1$-$C_4$-Alkyl oder -Alkoxy, Halogen, Cyan,

Z Wasserstoff, $C_1$-$C_4$-Alkyl oder -Alkoxy, Halogen, Cyan, eine Gruppe der Formel

-NH-CHO,
$-NH-CO-NH_2$,
-NH-CO-NH-Q oder
$-NH-CO-(O)_m-Q$,

worin m Null oder 1 und Q gegebenenfalls substituiertes $C_1$-$C_4$-Alkyl oder Phenyl bedeutet,

W einen gegebenenfalls substituierten Alkylrest,

K eine Kupplungskomponente der Formel

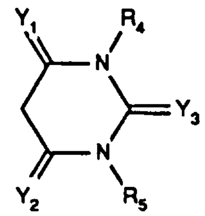

(II)

worin

$Y_1$ und $Y_2$ unabhängig voneinander =O, =NH oder =N-$C_1$-$C_4$-Alkyl,

$Y_3$ =O, =S, =NR oder =N-CN, wobei R Wasserstoff oder $C_1$-$C_4$-Alkyl ist,

$R_4$ und $R_5$ unabhängig voneinander je Wasserstoff, gegebenenfalls substituiertes Alkyl oder gegebenenfalls substituiertes Phenyl bedeuten,

n 1 oder 2 und

$An^{\ominus}$ ein Anion darstellt.

**2.** Disazofarbstoffe gemäss Anspruch 1, worin $R_1$, $R_2$, $R_3$ und W unabhängig voneinander je Methyl, Ethyl, n- oder iso-Propyl, n-, sec- oder tert-Butyl, geradkettiges oder verzweigtes Pentyl oder Hexyl, Cyclopentyl oder Cyclohexyl darstellen, wobei diese Reste substituiert sein können, durch Hydroxy,

Alkoxy, Cyano, Carbonamido oder am N-Atom mono- oder dialkyliertes Carbonamido, oder Phenyl, welches gegebenenfalls weitersubstituiert ist, durch Alkyl oder Alkoxy.

**3.** Azofarbstoffe gemäss Anspruch 2, worin $R_1$ Methyl oder Hydroxyethyl und $R_2$ und $R_3$ unabhängig voneinander je $C_1$-$C_3$-Alkyl, insbesondere je Methyl bedeuten.

**4.** Azofarbstoffe gemäss einem der Ansprüche 1 - 3, worin V Wasserstoff bedeutet.

**5.** Azofarbstoffe gemäss einem der Ansprüche 1 - 4, worin X Wasserstoff, Methyl oder Methoxy bedeutet.

**6.** Azofarbstoffe gemäss einem der Ansprüche 1 - 5, worin Y Wasserstoff, Methyl, Methoxy oder Chlor bedeutet.

**7.** Azofarbstoffe gemäss einem der Ansprüche 1 - 6, worin Z Methyl, Ethyl, Methoxy, Ethoxy, Acetylamino, Propionylamino, Methoxycarbonylamino, Ethoxycarbonylamino oder eine Gruppe der Formel -NH-CHO, -NH-CO-NH$_2$,

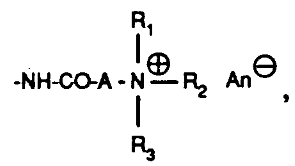

-NH-CO-R$_2$ oder

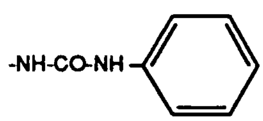

bedeutet, worin A Methylen, Ethylen, Propylen, oder Butylen, $R_1$ Methyl oder Hydroxyethyl und $R_2$ und $R_3$ unabhängig voneinander je $C_1$-$C_3$-Alkyl bedeuten.

**8.** Azofarbstoffe gemäss einem der Ansprüche 1 bis 7, worin W $C_1$-$C_4$-Alkyl bedeutet, welches durch Hydroxy, Cyano, Alkoxy, Phenyl oder Carbonamido substituiert sein kann.

**9.** Azofarbstoffe gemäss einem der Ansprüche 1 bis 8, worin $R_4$ und $R_5$ unabhängig voneinander je ein Methyl-, Ethyl-, n- oder iso-Propyl-, n-, sec.- oder tert.-Butyl-, ein geradkettiger oder verzweigter Pentyl- oder Hexyl- oder ein Cyclohexylrest ist, der durch -OH, $C_1$-$C_4$-Alkoxy oder $C_1$-$C_4$-Hydroxyalkoxy substituiert sein kann, oder ein Phenylrest, der durch $C_1$-$C_4$-Alkyl oder -Alkoxy, Chlor, Brom oder Nitro substituiert sein kann.

**10.** Azofarbstoffe gemäss Anspruch 9, worin $R_4$ und $R_5$ unabhängig voneinander je Wasserstoff oder $C_1$-$C_4$-Alkyl bedeuten.

**11.** Azofarbstoffe gemäss einem der Ansprüche 1 bis 10, worin $Y_1$ und $Y_2$ unabhängig voneinander je =O oder =NH bedeuten.

**12.** Azofarbstoffe gemäss Anspruch 11, worin $Y_1$ und $Y_2$ gleich sind.

**13.** Azofarbstoffe gemäss Anspruch 12, worin $Y_1$ und $Y_2$ je =O sind.

**14.** Azofarbstoffe gemäss einem der Ansprüche 1 bis 13, worin $Y_3$ =O, =S, =NH oder =N-CN, insbesondere =O bedeutet.

**15.** Azofarbstoffe gemäss Anspruch 1, worin $R_1$ Methyl oder Hydroxyethyl,
$R_2$ und $R_3$ unabhängig voneinander je $C_1$-$C_3$-Alkyl,

A Ethylen, Propylen oder Butylen,
V Wasserstoff,
X Wasserstoff, Methyl oder Methoxy,
Y Wasserstoff, Methyl, Methoxy oder Chlor,
Z Methyl, Methoxy, Ethyl, Ethoxy, Acetylamino, Propionylamino, Methoxycarbonylamino, Ethoxycarbonylamino oder eine Gruppe der Formel

-NH-CHO,
$-NH-CO-NH_2$,

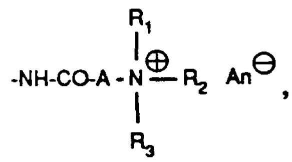

$-NH-CO-R_2$ oder

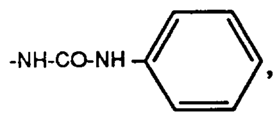

W $C_1$-$C_4$-Alkyl oder $C_1$-$C_4$-Alkyl, welches durch Hydroxy, Cyan, $C_1$-$C_4$-Alkoxy, Phenyl oder Carbonamido substituiert ist,
K eine Kupplungskomponente der Formel

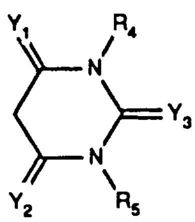

(II)

worin
$Y_1$ und $Y_2$ unabhängig voneinander je =O oder =NH,
$Y_3$ =O, =S, =NH oder =N-CN,
$R_4$ und $R_5$ unabhängig voneinander Wasserstoff oder $C_1$-$C_4$-Alkyl bedeuten,
n 1 oder 2 und
$An^{\ominus}$ ein Anion bedeutet.

**16.** Azofarbstoffe gemäss Anspruch 15, worin $R_1$, $R_2$ und $R_3$ je Methyl, A Propylen, V und X je Wasserstoff, $Y_3$ = O, $R_4$ und $R_5$ je Wasserstoff oder Methyl bedeuten und die übrigen Symbole die im Anspruch 14 aufgeführten Bedeutungen aufweisen.

**17.** Verfahren zur Herstellung der Azofarbstoffe der Formel (I) gemäss Anspruch 1, dadurch gekennzeichnet, dass man ein Amin der Formel

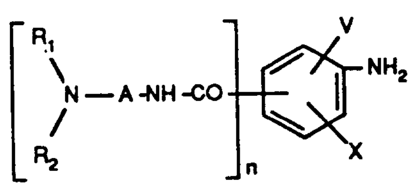

(III)

diazotiert, mit einer Kupplungskomponente der Formel

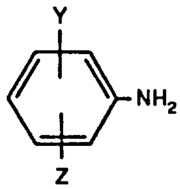

(IV)

umsetzt, die erhaltene Aminoazoverbindung erneut diazotiert, mit einer Kupplungskomponente der Formel

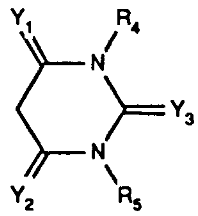

(II)

kuppelt, und anschliessend mit einem Alkylierungsmittel umsetzt, welches die Reste $R_3$ und W einführt, wobei $R_3$ und W identische Bedeutung aufweisen und wobei für $R_1$, $R_2$, $R_3$, A, V, X, Y, Z, $Y_1$, $Y_2$, $Y_3$, $R_4$, $R_5$, n, W und $An^{\ominus}$ die im Anspruch 1 angegebenen Bedeutungen gelten.

**18.** Verfahren zur Herstellung der Azofarbstoffe der Formel (I) gemäss Anspruch 1, dadurch gekennzeichnet, dass man einen Farbstoff der Formel

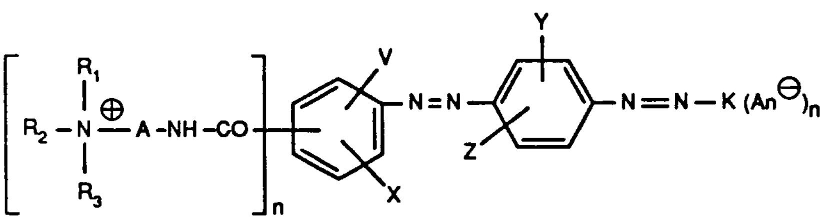

(V)

mit einem Alkylierungsmittel, welches die Gruppe W einführt, umsetzt, wobei für $R_1$, $R_2$, $R_3$, A, n, V, X, Z, Y, K, $An^{\ominus}$ und W die unter der Formel (I) angegebenen Bedeutungen gelten.

**19.** Verwendung der Azoverbindungen der Formel (I) gemäss Anspruch 1 zum Färben und Bedrucken von Textilmaterialien, Papier, Leder und zur Bereitung von Tinten.

**20.** Verwendung der Azoverbindungen der Formel (I) gemäss Anspruch 1 zum Färben und Bedrucken von natürlichen und regenerierten Cellulosematerialien, vor allem Baumwolle und Viscose.

**21.** Verwendung der Azoverbindungen der Formel (I) gemäss Anspruch 1 zum Färben und Bedrücken von Papier aller Arten, insbesondere zum Färben und Bedrucken von gebleichtem, ungeleimtem, ligninfreiem Papier.

**22.** Verwendung der Azoverbindungen der Formel (I) gemäss Anspruch 1 zum Färben und Bedrücken von Polyacrylnitrilmaterialien.

**23.** Die mit den Azoverbindungen der Formel (I) gemäss Anspruch 1 behandelten bzw. gefärbten und bedruckten Materialien.

## Claims

1. An unsulfonated cationic azo dye of formula

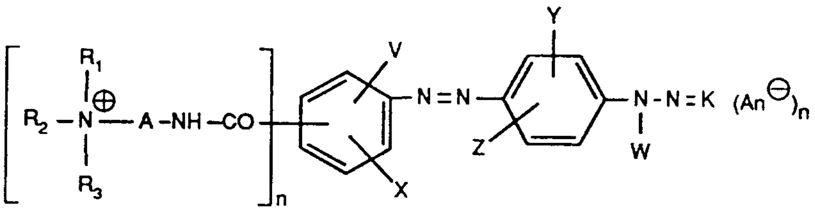

(I)

wherein
$R_1$, $R_2$ and $R_3$ are each independently of one another an unsubstituted or substituted alkyl radical or $R_1$ and $R_2$, together with the nitrogen atom linking them, or $R_1$, $R_2$ and $R_3$, together with the nitrogen atom linking them, are a heterocyclic radical,
A is an alkylene radical of 2 to 6 carbon atoms,
V and X are each independently of the other hydrogen, $C_1$-$C_4$alkyl or $C_1$-$C_4$alkoxy, each unsubstituted or substituted by hydroxyl, halogen, cyano or $C_1$-$C_4$alkoxy,
Y is hydrogen, $C_1$-$C_4$alkyl or $C_1$-$C_4$alkoxy, halogen or cyano,
Z is hydrogen, $C_1$-$C_4$alkyl or $C_1$-$C_4$alkoxy, halogen, cyano, a group of formula

-NH-CHO,
$-NH-CO-NH_2$,
-NH-CO-NH-Q or
$-NH-CO-(O)_m-Q$,

wherein m is zero or 1 and Q is unsubstituted or substituted $C_1$-$C_4$alkyl or phenyl,
W is an unsubstituted or substituted alkyl radical,
K is a coupling component of formula

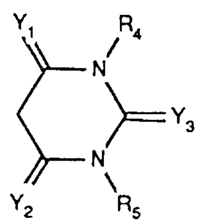

(II)

wherein
$Y_1$ and $Y_2$ are each independently of the other =O, =NH or $-N-C_1$-$C_4$alkyl,
$Y_3$ is =O, =S, =NR or =N-CN, where R is hydrogen or $C_1$-$C_4$alkyl,
$R_4$ and $R_5$ are each independently of the other hydrogen, unsubstituted or substituted alkyl or unsubstituted or substituted phenyl,
n is 1 or 2, and
$An^{\ominus}$ is an anion.

2. A disazo dye according to claim 1, wherein $R_1$, $R_2$, $R_3$ and W are each independently of one another methyl, ethyl, n- or isopropyl, n-, sec- or tert-butyl, straight-chain or branched pentyl or hexyl, cyclopentyl or cyclohexyl, which radicals may be substituted by hydroxyl, alkoxy, cyano, carboxamido or carboxamido which is mono- or dialkylated at the N-atom, or phenyl which may be further substituted by alkyl or alkoxy.

3. An azo dye according to claim 2, wherein $R_1$ is methyl or hydroxyethyl and $R_2$ and $R_3$ are each independently of the other $C_1$-$C_3$alkyl and are in particular each methyl.

4. An azo dye according to any one of claims 1 to 3, wherein V is hydrogen.

5. An azo dye according to any one of claims 1 to 4, wherein X is hydrogen, methyl or methoxy.

6. An azo dye according to any one of claims 1 to 5, wherein Y is hydrogen, methyl, methoxy or chloro.

7. An azo dye according to any one of claims 1 to 6, wherein Z is methyl, ethyl, methoxy, ethoxy, acetylamino, propionylamino methoxycarbonylamino, ethoxycarbonylamino or a group of formula -NH-CHO, $-NH-CO-NH_2$,

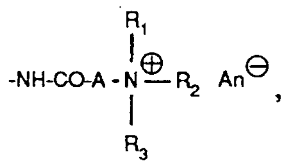

$-NH-CO-R_2$ or

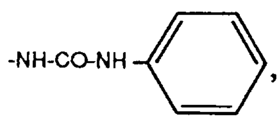

wherein A is methylene, ethylene, propylene or butylene, $R_1$ is methyl or hydroxyethyl, and $R_2$ and $R_3$ are each independently of the other $C_1$-$C_3$alkyl.

8. An azo dye according to any one of claims 1 to 7, wherein W is $C_1$-$C_4$alkyl which may be substituted by hydroxyl, cyano, alkoxy, phenyl or carboxamido.

9. An azo dye according to any one of claims 1 to 8, wherein $R_4$ and $R_5$ are each independently of the other methyl, ethyl, n- or isopropyl, n-, sec- or tert-butyl, straight-chain or branched pentyl or hexyl, or cyclohexyl, which may be substituted by -OH, $C_1$-$C_4$alkoxy or $C_1$-$C_4$hydroxyalkoxy, or are phenyl which may be substituted by $C_1$-$C_4$alkyl or $C_1$-$C_4$alkoxy, chloro, bromo or nitro.

10. An azo dye according to claim 9, wherein $R_4$ and $R_5$ are each independently of the other hydrogen or $C_1$-$C_4$alkyl.

11. An azo dye according to any one of claims 1 to 10, wherein $Y_1$ and $Y_2$ are each independently of the other =O or =NH.

12. An azo dye according to claim 11, wherein $Y_1$ and $Y_2$ are identical.

13. An azo dye according to claim 12, wherein $Y_1$ and $Y_2$ are each =O.

14. An azo dye according to any one of claims 1 to 13, wherein $Y_3$ is =O, =S, =NH or =N-CN, especially =O.

15. An azo dye according to claim 1, wherein
$R_1$ is methyl or hydroxyethyl,
$R_2$ and $R_3$ are each independently of the other $C_1$-$C_3$alkyl.
A is ethylene, propylene or butylene,
V is hydrogen,
X is hydrogen, methyl or methoxy,
Y is hydrogen, methyl, methoxy or chloro,
Z is methyl, methoxy, ethyl, ethoxy, acetylamino, propionylamino, methoxycarbonylamino, ethoxycarbonylamino or a group of formula

-NH-CHO,
-NH-CO-$NH_2$,

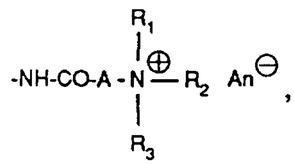

-NH-CO-$R_2$ or

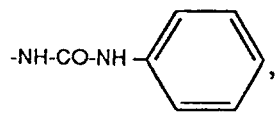

W is $C_1$-$C_4$alkyl or $C_1$-$C_4$alkyl which is substituted by hydroxyl, cyano, $C_1$-$C_4$alkoxy, phenyl or carboxamido,
K is a coupling component of formula

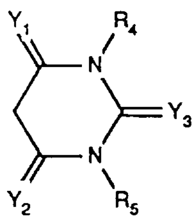

(II)

wherein
$Y_1$ and $Y_2$ are each independently of the other =O or -NH,
$Y_3$ is =O, =S, =NH or -N-CN,
$R_4$ and $R_5$ are each independently of the other hydrogen or $C_1$-$C_4$alkyl,
n is 1 or 2, and
$An^{\ominus}$ is an anion.

**16.** An azo dye according to claim 15, wherein $R_1$, $R_2$ and $R_3$ are each methyl, A is propylene, V and X are each hydrogen, $Y_3$ is =O, $R_4$ and $R_5$ are each hydrogen or methyl, and the other symbols are as defined in claim 14.

**17.** A process for the preparation of an azo dye of formula (I) according to claim 1, which comprises diazotising an amine of formula

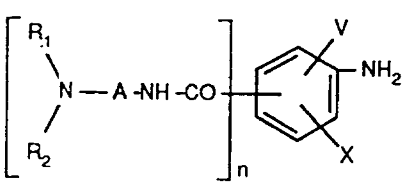

(III)

reacting the product with a coupling component of formula

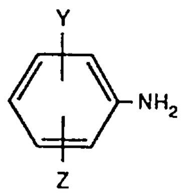

(IV)

diazotising again the aminoazo compound obtained and coupling the product with a coupling component of formula

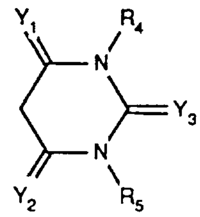

(II)

and subsequently reacting the coupling product with an alkylating agent which introduces the radicals $R_3$ and W, which radicals $R_3$ and W have the identical meaning and where $R_1$, $R_2$, $R_3$, A, V, X, Y, Z, $Y_1$, $Y_2$, $Y_3$, $R_4$, $R_5$, n, W and $An^{\ominus}$ are as defined in claim 1.

**18.** A process for the preparation of an azo dye of formula (I) according to claim 1, which comprises reacting a dye of formula

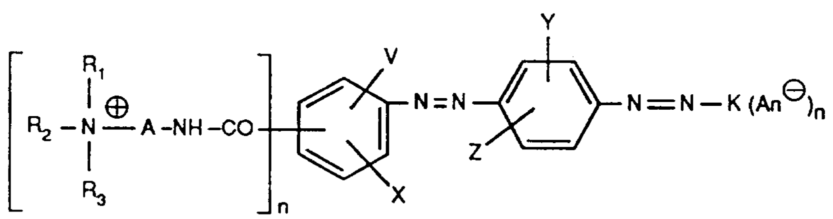

(V)

with an alkylating agent which introduces the group W, with $R_1$, $R_2$, $R_3$, A, n, V, X, Z, Y, K, $An^{\ominus}$ and W being as defined for formula (I).

**19.** The use of an azo compound of formula (I) according to claim 1 for dyeing and printing textile materials, paper and leather and for preparing inks.

**20.** The use of an azo compound of formula (I) according to claim 1 for dyeing and printing natural and regenerated cellulosic materials, especially cotton and viscose.

**21.** The use of an azo compound of formula (I) according to claim 1 for dyeing and printing paper of all kinds, especially for dyeing and printing bleached, unsized, lignin-free paper.

**22.** The use of an azo compound of formula (I) according to claim 1 for dyeing and printing polyacrylonitrile materials.

**23.** Material treated or dyed or printed with an azo compound of formula (I) according to claim 1.

## Revendications

**1.** Colorants azoïques cationiques exempts de groupes acide sulfonique de formule

(I)

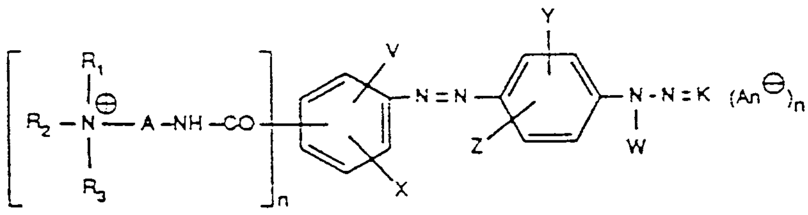

dans laquelle
$R_1$, $R_2$ et $R_3$ représentent indépendamment l'un de l'autre un résidu alkyle pouvant être substitué, ou $R_1$ et $R_2$ ensemble avec l'atome d'azote les reliant, ou $R_1$ et $R_2$ et $R_3$ ensemble avec l'atome d'azote les reliant, forment un résidu hétérocyclique.
A représente un résidu alkylène comportant de 2 à 6 atomes de carbone.
V et X représentent indépendamment un atome d'hydrogène ou un groupe alkyle en $C_{1-4}$ ou alcoxy en $C_{1-4}$ éventuellement substitués par un groupe hydroxy, cyano, alcoxy en $C_{1-4}$ ou un atome d'halogène,
Y représente un atome d'hydrogène, un groupe alkyle en $C_{1-4}$ ou alcoxy en $C_{1-4}$, un groupe cyano ou un atome d'halogène,
Z représente un atome d'hydrogène, un groupe alkyle en $C_{1-4}$ ou alcoxy en $C_{1-4}$, un groupe cyano, un atome d'halogène ou un groupe de formule

-NH-CHO,
$-NH-CO-NH_2$,
-NH-CO-NH-Q ou
$-NH-CO-(O)_m-Q$

dans lesquelles m est égal à 0 ou 1 et Q est un groupe alkyle en $C_{1-4}$ éventuellement substitué ou phényle,
W est un résidu alkyle éventuellement substitué,
K est un copulant de formule

(II)

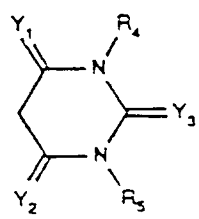

dans laquelle $Y_1$ et $Y_2$ représentent indépendamment l'un de l'autre un =O, =NH, =N-(alkyle en $C_{1-4}$),
$Y_3$ est =O, =S, =NR ou =N-CN, R étant un atome d'hydrogène ou un groupe alkyle en $C_{1-4}$,
$R_4$ et $R_5$ représentent indépendamment un atome d'hydrogène ou un groupe alkyle ou phényle éventuellement substitués,
n est égal à 1 ou 2 et
$An^-$ représente un anion.

**2.** Colorants diazoïques conformes à la revendication 1, dans lesquels $R_1$, $R_2$ et $R_3$ représentent indépendamment chacun un groupe méthyle, éthyle n- ou iso-propyle, n-, se- ou tert-butyle, pentyle ou hexyle à chaîne linéaire ou ramifiée, cyclopentyle ou cyclohexyle,ces résidus pouvant être substitués par des résidus hydroxy, alcoxy, cyano, carbonamido ou carbonamido mono- ou di-N-alkylés, ou phényle qui, à son tour, peut être substitué par un résidu alkyle ou alcoxy.

3. Colorants azoïques conformes à la revendication 2, dans lesquels $R_1$ représente un groupe méthyle et $R_2$ et $R_3$ représentent indépendamment l'un de l'autre chacun un groupe alkyle en $C_{1-3}$, en particulier méthyle.

4. Colorants azoïques conformes à une des revendications 1 - 3, dans lesquels V représente un atome d'hydrogène.

5. Colorants azoïques conformes à une des revendications 1 - 4, dans lesquels X représente un atome d'hydrogène, un groupe méthyle ou méthoxy.

6. Colorants azoïques conformes à une des revendications 1 - 5, dans lesquels Y représente un atome d'hydrogène, un groupe méthyle ou méthoxy ou un atome de chlore.

7. Colorants azoïques conformes à une des revendications 1 - 6, dans lesquels Z représente un groupe méthyle, éthyle, méthoxy éthoxy, acétylamino, propionylamino, méthoxycarbonylamino, éthoxycarbonylamino ou un groupe de formule -NH-CHO, $-NH-CO-NH_2$, $-NH-CO-R_2$,

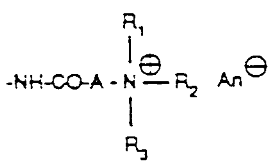

ou

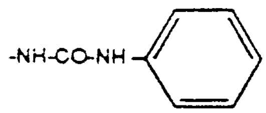

où A représente un groupe méthylène, éthylène, propylène ou butylène, $R_1$ un groupe méthyle ou hydroxyéthyle et $R_2$ et $R_3$ indépendamment un groupe alkyle en $C_{1-3}$.

8. Colorants azoïques conformes à une des revendications 1 à 7, dans lesquels W représente un groupe alkyle en $C_{1-4}$ pouvant être substitué par un groupe hydroxy, cyano, alcoxy, phényle ou carbonamido.

9. Colorants azoïques conformes à une des revendications 1 - 8, dans lesquels $R_4$ et/ou $R_5$ représentent indépendamment l'un de l'autre chacun un groupe méthyle, éthyle, n- ou iso-propyle, n-, sec- ou tert-butyle, pentyle ou hexyle à chaîne linéaire ou ramifiée ou cyclohexyle, qui peut être substitué par un résidu -OH, alcoxy en $C_{1-4}$ ou hydroxyalcoxy en $C_{1-4}$, ou un résidu phényle pouvant être substitué par un groupe alkyle en $C_{1-4}$ ou alcoxy en $C_{1-4}$, un atome de chlore ou de brome ou par un groupe nitro.

10. Colorants azoïques conformes à la revendication 9 dans lesquels $R_4$ et $R_5$ représentent indépendamment l'un de l'autre chacun un atome d'hydrogène ou un groupe alkyle en $C_{1-4}$.

11. Colorants azoïques conformes à une des revendications 1 - 10, dans lesquels $Y_1$ et $Y_2$ représentent indépendamment l'un de l'autre chacun un résidu =O ou =NH.

12. Colorants azoïques conformes à la revendication 11 dans lesquels $Y_1$ et $Y_2$ sont identiques.

13. Colorants azoïques conformes à la revendication 12 dans lesquels $Y_1$ et $Y_2$ représentent chacun un résidu =O.

14. Colorants azoïques conformes à une des revendications 1 - 13 dans lesquels $Y_3$ représente un résidu =O, =S, =NH ou =N-CH, en particulier =O.

15. Colorants azoïques conformes à la revendication 1, dans lesquels
$R_1$ représente un groupe méthyle ou hydroxyéthyle,
$R_2$ et $R_3$ représentent indépendamment un groupe alkyle en $C_{1-3}$,
A représente un groupe éthylène, propylène ou butylène,
V représente un atome d'hydrogène,
X représente un atome d'hydrogène, un groupe méthyle ou méthoxy,
Y représente un atome d'hydrogène, un groupe méthyle ou méthoxy ou un atome de chlore,

Z représente un groupe méthyle, méthoxy, éthyle, éthoxy, acétylamino, propionylamino, méthoxycarbonylamino, éthoxycarbonylamino ou un groupe de formule

-NH-CHO,
$-NH-CO-NH_2$,

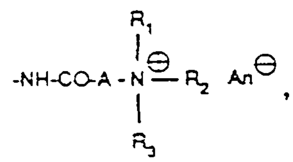

$-NH-CO-R_2$

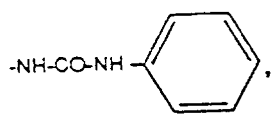

W est un groupe alkyle en $C_{1-4}$ substitué ou non par un groupe hydroxy, cyano, alcoxy en $C_{1-4}$, phényle ou carbonamido,
K représente un copulant de formule

(II)

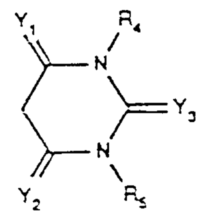

dans laquelle
$Y_1$ et $Y_2$ désignent indépendamment l'un de l'autre un =O ou =NH,
$Y_3$ représente un =O, =S, =NH ou =N-CN,
$R_4$ et $R_5$ représentent indépendamment un atome d'hydrogène ou un groupe alkyle en $C_{1-4}$,
n est égal à 1 ou 2 et
$An^-$ représente un anion.

**16.** Colorants azoïques conformes à la revendication 15 dans lesquels $R_1$, $R_2$ et $R_3$ représentent chacun un groupe méthyle, A un groupe propylène, V et X chacun un atome d'hydrogène, $Y_3$ un =O, $R_4$ et $R_5$ chacun un atome d'hydrogène ou un groupe méthyle et les autres symboles ont la signification indiquée dans la revendication 14.

**17.** Procédé pour la préparation de colorants azoïques de formule (I) conformes à la revendication 1, caractérisé en ce que l'on réalise la diazotation d'une amine de formule

(III)

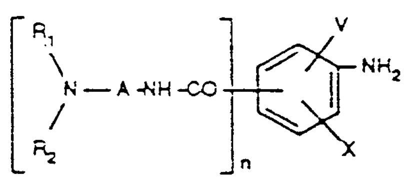

que l'on faite réagir avec un copulant de formule

(IV) 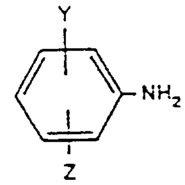

puis en ce que l'on soumet le composé aminoazoïque obtenu de nouveau à une diazotation, à une copulation avec un copulant de formule

(II) 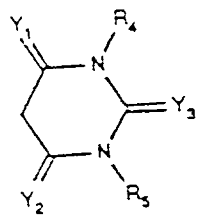

puis à une alkylation par un agent d'alkylation, introduisant les résidus $R_3$ et W, $R_3$ et W étant dans ce cas identiques et $R_1$, $R_2$, $R_3$, A, V, X, Y, Z, $Y_1$, $Y_2$, $Y_3$, $R_4$, $R_5$, n, W et $An^-$ ayant la signification indiquée dans la revendication 1.

**18.** Procédé pour la préparation de colorants azoïques de formule (I) conformes à la revendication 1, caractérisé en ce que l'on fait réagir un colorant de formule

(V) 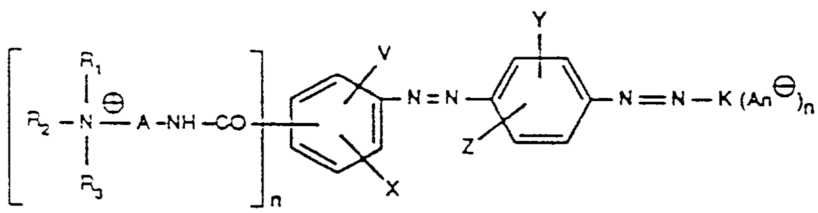

avec un agent d'alkylation qui introduit le groupe W, où $R_1$, $R_2$, $R_3$, A, n, V, X, Y, Z, K et $An^-$ ont la signification indiquée dans la revendication 1.

**19.** Utilisation des composés de formule (I) conformes à la revendication 1 pour la teinture et l'impression de matériaux textiles, de papier, de cuir et pour la préparation d'encres.

**20.** Utilisation des composés azoïques de formule (I) conformes à la revendication 1 pour la teinture et l'impression de matériaux en cellulose naturelle ou régénérée, en particulier du coton ou de la viscose.

**21.** Utilisation des composés azoïques de formule (I) conformes à la revendication 1 pour la teinture et l'impression de papier de toutes sortes, en particulier pour la teinture et l'impression de papier non collé, exempt de lignine et blanchi.

**22.** Utilisation des composés azoïques de formule (I) conformes à la revendication 1 pour la teinture et l'impression de matériaux en polyacrylonitrile.

**23.** Matériaux traités, c'est-à-dire teints et imprimés à l'adie des composés azoïques de formule (I) conformes à la revendication 1.